Europäisches Patentamt

European Patent Office

Office européen des brevets

(11) Veröffentlichungsnummer: **0 153 666**
A2

## (12) EUROPÄISCHE PATENTANMELDUNG

(21) Anmeldenummer: 85101593.3

(22) Anmeldetag: 14.02.85

(51) Int. Cl.⁴: **F 02 F 3/00**
**F 16 J 1/02**

(30) Priorität: 17.02.84 US 581485

(43) Veröffentlichungstag der Anmeldung:
'04.09.85 Patentblatt 85/36

(84) Benannte Vertragsstaaten:
DE FR GB IT SE

(71) Anmelder: DEERE & COMPANY
1 John Deere Road
Moline Illinois 61265(US)

(72) Erfinder: Das, Pranab Kumar
7140 Pioneer Drive
RR3 Cedar Falls Iowa 50613(US)

(74) Vertreter: Feldmann, Bernhard et al,
DEERE & COMPANY European Office, Patent
Department Steubenstrasse 36-42 Postfach 503
D-6800 Mannheim 1(DE)

(54) Kolben.

(57) Ein Kolben (10), insbesondere zur Verwendung in einer Verbrennungskraftmaschine, mit zwei an einer Wand eines Zylinders (12) gleitenden Druckseiten (22, 24), weist zum Führen des Kolbens (10) und zum Verringern der Gleitfläche und somit der Gleitreibung sich von den Druckseiten (22, 24) erhebende profilierte Stützpuffer (26) auf. Das Profil der Stützpuffer (26) ist gekrümmt.

Fig. I

EP 0 153 666 A2

Croydon Printing Company Ltd.

## Kolben

Die Erfindung betrifft einen Kolben, insbesondere Kolben für eine Verbrennungskraftmaschine, der in einem Zylinder beweglich geführt ist und mindestens zwei Druckseiten aufweist, von denen sich jeweils mindestens zwei Stützpuffer abheben.

Ein derartiger Kolben ist bereits aus dem Artikel "The AEconoguide Low Friction Piston Skirt Design" aus Paper No. 30, AE - Symposium, April 18th - 21st 1982 bekannt. Dieser Kolben findet Anwendung in einer Verbrennungskraftmaschine und besteht unter anderem aus einem Kolbenmantel und einer Kolbenbolzenbohrung, wobei sich der Kolbenmantel in zwei Druckseiten unterteilt, die die Führung des Kolbens in einem Zylinder der Verbrennungskraftmaschine übernehmen. Die Belastungsmittenebene des Kolbenmantels erstreckt sich durch die beiden Druckseiten und durch die Längsmittenachse des Kolbens. Zur Führung des Kolbens sind auf jeder Druckseite drei Stützpuffer vorgesehen, die sich von den Druckseiten um einen Betrag von 0,025 bis 0,05 mm abheben. Der Übergang von der jeweiligen Druckseite zu der die Führung übernehmenden Oberfläche der Stützpuffer erfolgt in einer Geraden, die zu der Druckseite maximal einen Winkel von 1,5° vorzugsweise aber nur von 1° einnehmen darf. Diese Winkel dürfen keinesfalls überschritten werden, da ansonsten ein sich zwischen den Druckseiten bzw. seinen Stützpuffern und der Zylinderwand befindlicher Schmierölfilm abreißt, bzw. abgeschert wird. Die Winkelangaben gelten nur für die Neigung in der Bewegungsrichtung des Kolbens in dem Zylinder, die senkrecht zu der Bewegungsrichtung sich ergebende Neigung ist davon nicht betroffen.

Diesem Kolben hängt der Nachteil an , daß die geringe Neigung in der Produktion sehr schwer einzuhalten ist und aufgrund des sehr geringen Ansteigens von den Druckseiten aus in Verbindung mit dem ohnehin knappen Raum nur eine begrenzte Höhe der Stützpuffer erzielt werden kann. Bedingt durch die geringe Höhe ist die Dauerfestigkeit eines derartigen Kolbens jedoch minimal, denn nach einer geringen Zahl an Betriebsstunden ist der Verschleiß an den Stützpuffern bereits so groß, daß der ursprüngliche Zustand, nämlich eine blanke Druckseite, wieder eintritt und der Kolben zum Fressen an der Zylinderwand neigt. Eine Vergrößerung des Winkels ist nicht möglich, da dann die hydrodynamische Eigenschaft der Stützpuffer verloren geht und der Schmierfilm abreißt.

Die der Erfindung zugrunde liegende Aufgabe wird darin gesehen, das Verschleißverhalten und die hydrodynamische Eigenschaft der Stützpuffer zu verbessern.

Diese Aufgabe ist erfindungsgemäß dadurch gelöst worden, daß die Stützpuffer in der Bewegungsrichtung des Kolbens ein gekrümmtes Profil aufweisen.

Auf diese Weise ist nahezu unabhängig von der Höhe der Stützpuffer durch den gekrümmten Verlauf des Profils und somit des Anstieges von der jeweiligen Druckseite zu den Stützpuffern ein gutes hydrodynamisches Verhalten der Stützpuffer gewährleistet, so daß die Höhe der Stützpuffer 0,25 mm, also das 0,5-fache dessen was bisher möglich war, betragen kann. Die vergrößerte Höhe bewirkt somit auch eine längere Standzeit des Kolbens. Auch wenn die Stützpuffer bereits nach vielen Betriebsstunden etwas abgeflacht sind, geht deren hydrodynamische Eigenschaft nicht verloren. Dies bedeutet, daß die Oberfläche der Stützpuffer, die mit der Zylinderwand in Berührung kommt, bei der Herstellung nicht unbedingt gewölbt sein muß, sondern genausogut auch abgeflacht sein kann.

Die in den Unteransprüchen angegebenen und die Erfindung
fortentwickelnden Merkmale sorgen in vorteilhafter Weise
stets für eine gute hydrodynamische Eigenschaft der Stützpuffer. Insbesondere die günstige Anordnung der Stützpuffer
auf den Druckseiten sorgt dafür, daß der Kolben in dem Zylinder optimal geführt wird und nicht kippt, und daß die
Belastung auf den Kolbenmantel bestmöglichst aufgefangen
wird.

In der Zeichnung sind mehrere nachfolgend näher beschriebene Ausführungsbeispiele der Erfindung dargestellt. Es
zeigt:

> Fig. 1    einen in einem Zylinder aufgenommenen
>           Kolben im vertikalen Längsschnitt,
>
> Fig. 2    den in Fig. 1 gezeichneten Kolben um
>           90° um seine Längsachse gedreht mit dem
>           Zylinder im vertikalen Längsschnitt,
>
> Fig. 3    den Querschnitt eines auf dem Kolben
>           von Fig. 1 abgebildeten Stützpuffers,
>
> Fig. 4    eine alternative Ausführung des Stütz-
>           puffers;
>
> Fig. 5    eine Seitenansicht des Kolbens mit zwei
>           horizontal angeordneten Stützpuffern,
>
> Fig. 6    den Kolben in Seitenansicht mit zwei ver-
>           tikal angeordneten Stützpuffern,
>
> Fig. 7    den Kolben in Seitenansicht mit drei
>           Stützpuffern, von denen einer größer ist
>           als die beiden anderen,

Fig. 8     den Kolben in Seitenansicht mit drei gleich großen Stützpuffern,

Fig. 9     den Kolben in Seitenansicht mit drei Stützpuffern, von denen zwei untere jeweils größer sind als ein darüber angeordneter,

Fig. 10    den Kolben in Seitenansicht mit drei gleich großen Stützpuffern, von denen zwei unterhalb einer durch eine Kolbenbolzenbohrung führenden Mittellinie gelegen sind und

Fig. 11    den Kolben in Seitenansicht mit vier gleich großen Stützpuffern.

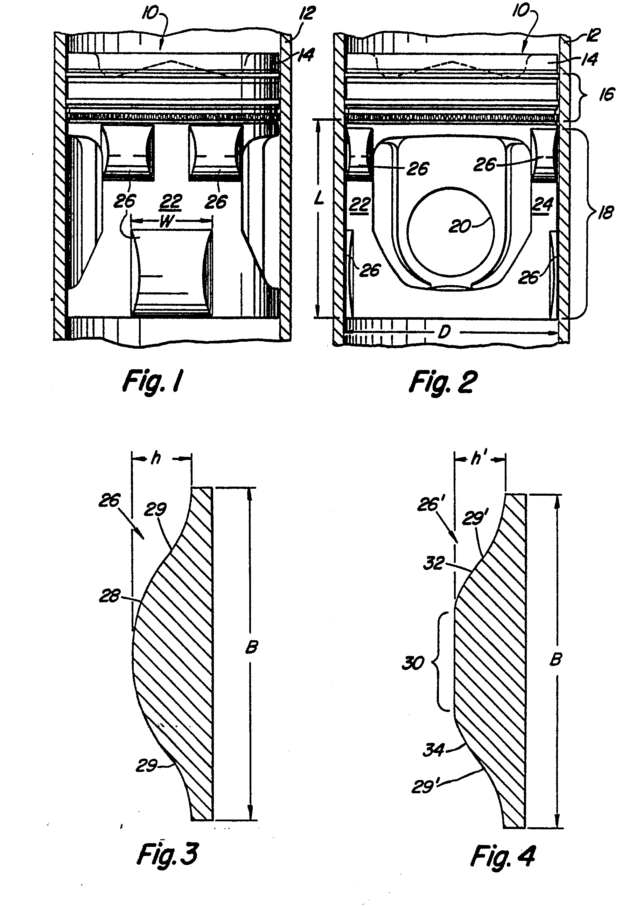

In den Figuren 1 und 2 ist ein Kolben 10 einer Brennkraftmaschine in einem Zylinder 12 dargestellt. Der Kolben enthält eine Krone 14 oder Kolbenboden mit einem Ringsteg 16, wobei beide miteinander eine Einheit bilden. Der Kolben 10 weist ferner einen Kolbenmantel 18 mit einer Kolbenbolzenbohrung 20 auf, wobei sich die Kolbenbolzenbohrung 20 quer zur Längsmittenachse des Kolbens 10 durch den Kolbenmantel 18 hindurch erstreckt. Die äußere Oberfläche des Kolbenmantels 18 weist eine Lauffläche mit zwei sich gegenüberliegenden Bereichen auf, die sich gegenüberliegende Druckseiten 22 und 24 bilden. Einstückig mit jeder Druckseite 22, 24 geformt befinden sich auf diesen zwei oder mehrere Stützpuffer 26, die geschaffen sind, um die innere Wand des Zylinders 12 zu berühren, sobald sich der Kolben 10 während seines Einsatzes wärmebedingt ausgedehnt hat. Beim Herstellen derartiger Kolben 10 muß man das Profil und die Unrundheit durch bekannte Techniken ausarbeiten und dann die Stützpuffer 26 auf das Kolbenprofil übertragen.

Aus Figur 3 ist ersichtlich, daß jeder Stützpuffer 26 ein Profil 28 hat, das in der Richtung der Kolbenbewegung symmetrisch gekrümmt ist. Dieses Profil 28 kann gewölbt, rund oder kreisförmig, elliptisch oder sinusförmig sein, oder es kann eine Änderung der vorgenannten Formen, also eine andere Form sein. Vorzugsweise weist das geformte Profil 28 eine Symmetrie zu einer horizontalen Mittenebene auf, wenn der Kolben 10, auf dem es angebracht ist, einen vertikal ausgerichteten Hub ausführt. Außerdem kann das Profil 28 einen Wendepunkt 29 in den Richtungen der Kolbenbewegung aufweisen. Wenn zwei Wendepunkte 29 vorgesehen sind, sollten diese nahe den Führungs- und Laufbereichen der Stützpuffer 26 angeordnet werden. Die Anwendung von geschmeidigen, gekrümmten Profilen 28 auf den äußeren Oberflächen der Stützpuffer 26 ermöglicht es, die Höhe (h) jedes Stützpuffers 26 gegenüber der von herkömmlichen Stützpuffern, die eine gerade konische Oberfläche aufweisen, zu vergrößern. Dies kommt daher, daß die Neigung des gekrümmten Profils 28 sich dem Wert Null nähert, wenn sie in die Nähe des Scheitelpunktes gelangt, und dies sorgt für eine gute hydrodynamische Wirkung. Zusätzlich ermöglicht das Vorliegen des Winkelwechsels der Neigung des gekrümmten Profils 28, daß die Höhe (h) größer gestaltet werden kann, was sich wieder günstig auf die Verschleißtoleranzen der Stützpuffer 26 auswirkt. Bei den geraden, konischen Stützpuffern, wird jeglicher Verschleiß den Nutzen der Stützpuffer verringern, sobald das Höhenmaß so klein wird.

Das in Figur 4 gezeigte Profil 26' besitzt eine flache Berührungsoberfläche 30, die von zwei sich gleichmäßig ändernden, symmetrischen, gekrümmten Abschnitten 32 und 34, die Wendepunkte 29' enthalten, flankiert werden. Dabei sind die Wendepunkte 29' in der Richtung der Kolbenbewegung, also auf- und abwärts vorgesehen. Dieses Profil 26' ist charakteristisch für die Stützpuffer 26 wenn sie einmal angefangen haben zu verschleißen. Man erkennt aber, daß sogar mit der verringerten Höhe (h') das gekrümmt geformte Profil an beiden, den Führungs- und den Laufbereichen, erhalten bleibt.

Wenn man die Stützpuffer 26 mit einem gekrümmten Profil 28 benutzt, ist es möglich, eine Höhe (h) einzuhalten, die ca. 0,025 bis 0,25 mm bei einem Kolben 10 mit einem Durchmesser von ca. 100 mm beträgt. Benutzt man währenddessen einen gerade konischen Stützpuffer auf einem Kolben mit dem gleichen Durchmesser, dann ist die Höhe auf das Maß von 0,025 mm beschränkt. Dies bedeutet, daß das erfindungsgemäße gekrümmte Profil 28 zehnmal so dick sein kann und daher weitaus verschleißfester ist.

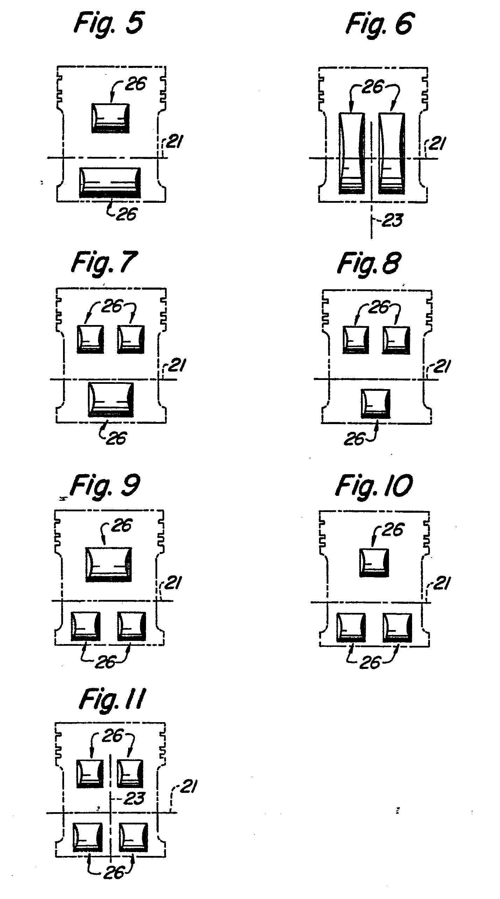

Mit Bezug auf Figur 5 wird festgestellt, daß, wenn zwei oder mehr Stützpuffer 26 horizontal auf jeder Druckseite 22, 24 vorgesehen sind, die Breite (W) jedes Stützpuffers 26 ein Maß von 0,25 bis 0,75 multipliziert mit dem Durchmesser (D) des Kolbenmantels 18 haben sollte. Entsprechend sollte die Länge (B) der Stützpuffer 26 zwischen 0,1 bis 0,4 multipliziert mit der Länge (L) des Kolbenmantels 18 betragen.

Wenn, wie in Figur 6 veranschaulicht, zwei vertikal angeordnete Stützpuffer 26 vorgesehen sind, dann sollte die Breite jedes Stützpuffers (26) zwischen 0,1 bis 0,25 multipliziert mit dem Durchmesser (D) des Kolbenmantels 18 und die Länge (B) der Stützpuffer 26 zwischen 0,25 bis 0,75 multipliziert mit der Länge (L) des Kolbenmantels 18 liegen.

Die Gestaltung der Stützpuffer 26 auf den Druckseiten 22, 24 kann geändert werden, um diese am besten einem speziellen Kolbendurchmesser, seiner Hubgeschwindigkeit und seinen Kraftanforderungen anpassen zu können. Jedoch sollte in allen Fällen dafür gesorgt werden, daß die Kontaktflächen jedes Stützpuffers 26 symmetrisch zu der axialen Belastungsmittenebene des Kolbens 10 angeordnet sind.

Die axiale Belastungsmittenebene des Kolbenmantels 18 erstreckt sich sowohl durch die Druckseiten 22 und 24 als auch durch die Längsmittenlinie des Kolbens 10. Wenn auf jeder Druckseite 22, 24 des Kolbens 10 nur zwei Stützpuffer 26 horizontal angeordnet sind, dann werden vorzugsweise die beiden Stützpuffer 26 an den entgegengesetzten Enden des Kolbenmantels 18 angeordnet, wie dies in Figur 5 dargesetllt ist, wobei dort ein Stützpuffer 26 oberhalb und der andere Stützpuffer 26 unterhalb einer Mittenlinie 21 der Kolbenbolzenbohrung 20 vorgesehen ist. Diese Anordnung wird ein Anschlagen des Kolbens 10 während seiner Hubbewegung in dem Zylinder 12 verhindern.

Wenn auf jeder Druckseite 22, 24 nur zwei vertikal ausgerichtete Stützpuffer 26 angebracht sind, wie dies in Figur 6 veranschaulicht ist, dann ist es vorzuziehen, die beiden Stützpuffer 26 voneinander zu trennen und jeden mit einem gleichen Abstand zu der vertikalen Mittenachse 23 der Druckseiten 22, 24 anzuordnen.

Im folgenden wird Bezug auf die Figuren 7 bis 10 genommen, die wahlweise Ausgestaltungen zum Benutzten von drei Stützpuffern 26 auf jeder Druckseite 22, 24 des Kolbens 10 zeigen.

Gemäß Figur 7 sind zwei Stützpuffer 26 mit gleichem Profil 28 und gleicher Größe oberhalb der Mittenlinie 21 der Kolbenbolzenbohrung 20 vorgesehen, während sich ein größer gestalteter Stützpuffer 26 unterhalb der Mittenlinie 21 der Kolbenbolzenbohrung 20 befindet. Alle drei Stützpuffer 26 sollten noch symmetrisch um die Belastungsmittenebene des Kolbenmantels 18 angeordnet sein.

Entsprechend Figur 8 befinden sich drei Stützpuffer 26 von gleicher Größe auf jeder Druckseite 22, 24 in einer ähnlichen Anordnung wie sie in Figur 7 gezeigt ist. Nach Figur 9 sind drei Stützpuffer 26 auf jeder Druckseite 22, 24 angebracht, wobei ein größerer Stützpuffer 26 in dem oberen Bereich des Kolbenmantels 18 gelegen ist. Gemäß Figur 10 sind drei gleichmäßig große Stützpuffer 26 auf jeder Druckseite 22, 24 angesiedelt, von denen ein Stützpuffer 26 oberhalb und die verbleibenden zwei unterhalb der Mittenlinie 21 der Kolbenbolzenbohrung 20 angeordnet sind.

Figur 11 zeigt eine weitere Anordnung, wonach vier im wesentlichen gleich große Stützpuffer 26 auf jeder Druckseite 22, 24 eines Kolbens 10 vorgesehen sind. Bei dieser Anordnung sind zwei Stützpuffer 26 oberhalb der Mittenlinie 21 der Kolbenbolzenbohrung 20 und die zwei verbleibenden Stützpuffer 26 unterhalb der Mittenlinie 21 der Kolbenbolzenbohrung 20 angebracht. Vorzugsweise sind die beiden oberen wie aber auch die beiden unteren Stützpuffer 26 um die vertikale Mittenachse 23 des Kolbens 10 angeordnet. Jedoch kann der Abstand, mit welchem die oberen und die unteren Stützpuffer 26 zu der horizontalen Mittenlinie 21 und/oder zu der vertikalen Mittenachse 23 angeordnet sind, sich ändern, wie dies aus Figur 11 hervorgeht. Es soll hier darauf verwiesen werden, daß andere Anordnungen, die zwei oder mehr Stützpuffer 26 auf jeder Durckseite 22, 24 verwenden, möglich sind, und daß derartige Ausführungsformen als noch in die Lehre dieser Erfindung fallend zu betrachten sind.

Wenn auch verschieden gekrümmte Profile 28 für jeden Stützpuffer 26 Anwendung finden können, so ist es dennoch ratsam, bei allen Stützpuffern 26, die sich auf einem Kolben 10 befinden, das gleiche Profil 28 zu verwenden. Diese Maßnahme gewährt nämlich, daß alle Stützpuffer 26 die gleiche Höhe besitzen und daß Verschleiß auf alle Kontaktflächen aller
Stützpuffer 26 gleichmäßig verteilt wird.

Patentansprüche

1. Kolben, insbesondere Kolben für eine Verbrennungskraftmaschine, der in einem Zylinder (12) beweglich geführt
ist und mindestens zwei Druckseiten (22, 24) aufweist, von
denen sich jeweils mindestens zwei Stützpuffer (26) abheben, dadurch gekennzeichnet, daß die Stützpuffer (26) in
der Bewegungsrichtung des Kolbens (10) ein gekrümmtes
Profil (28, 26') aufweisen.

2. Kolben nach Anspruch 1, dadurch gekennzeichnet, daß das
Profil (28, 26') gewölbt, gerundet, kreisförmig, ellyptisch oder sinusförmig gestaltet ist.

3. Kolben nach Anspruch 1 oder 2, dadurch gekennzeichnet,
daß das die Krümmung jedes Profils (26', 28) in der Bewegungsrichtung des Kolbens (10) einen Wendepunkt (29,
29') aufweist.

4. Kolben nach Anspruch 1, dadurch gekennzeichnet, daß die
Stützpuffer eine flache Oberfläche aufweisen, die beiderseits in der Bewegungsrichtung des Kolbens (10) gleichmäßig über jeweils eine Krümmung bis zu den Druckseiten
(22, 24) verläuft.

5. Kolben nach Anspruch 1, mit einem Kolbenmantel (18) und
einer Kolbenbolzenbohrung (20), wobei die Stützpuffer
(26) symmetrisch zu einer Belastungsmittenebene des
Kolbenmantels (18) angeordnet sind und die Belastungsmittenebene durch die Druckseiten (22, 24) und eine
Längsmittenachse des Kolbens (10) verläuft, dadurch gekennzeichnet, daß auf jeder Druckseite (22, 24) vier
Stützpuffer (26) vorgesehen sind, von denen sich jeweils zwei unterhalb und zwei oberhalb der Mittenlinie
(21) der Kolbenbolzenbohrung 20 befinden.

Fig. 1

Fig. 2

Fig. 3

Fig. 4

2/2

**Fig. 5**

26
21
26

**Fig. 6**

26
21
23

**Fig. 7**

26
21
26

**Fig. 8**

26
21
26

**Fig. 9**

26
21
26

**Fig. 10**

26
21
26

**Fig. 11**

26
21
23
26